# EUROPEAN PATENT APPLICATION

(11) **EP 4 220 339 A1**
(43) Date of publication of application: **02.08.2023**
(21) Application number: 22178592.6
(22) Date of filing: 13.06.2022
(51) Int. Cl.: G06F 1/16

(54) **SHELTERING DEVICE**

(30) Priority: 26.01.2022 TW 111103224
(71) Applicant: BenQ Corporation, Taipei 114 (TW)
(72) Inventor: Chiang, Chin-Fu, 238 New Taipei City (TW)
(74) Representative: Straus, Alexander

(57) **Abstract**

A sheltering device (10, 10A, 10B, 10C) is applied to a computer display (12) and includes a fixed sheltering module (14) and a movable sheltering module (16). The fixed sheltering module (14) is disposed on the computer display (12). The movable sheltering module (16) is rotatably connected to the fixed sheltering module (14). The movable sheltering module (16) includes a movable lateral plate (26), and an overlapped degree between the movable lateral plate (26) and the fixed sheltering module (14) is varied in accordance with rotation between the fixed sheltering module (14) and the movable sheltering module (16).

## Description

### Field of the Invention

The present invention relates to a sheltering device with the angle adjustment function according to the pre-characterizing clauses of claim 1.

### Background of the Invention

Users are more concerned about the audio-visual experience of the entertainment device with the advanced technology. As an example of the gaming monitor, hardware and software configuration of the gaming monitor may have functions of high contrast ratio, high sharpness, and ability of automatically adjusting brightness in response to variation of the ambient light. However, the displaying result of the gaming monitor is still affected by the ambient light even if the brightness of the gaming monitor can be adjusted according to change of the ambient light, which results in low image quality. Conventional solution may install a shelter around the monitor to avoid interference of the ambient light. The display apparatus may have one monitor or be assembly of several monitors, and the shelter has to be specially designed in response to a number of the monitor of the related display apparatus. The conventional specially designed shelter does not have an angle adjustment function, and cannot be changed in accordance with the number of the monitors of the display apparatus. Therefore, design of a sheltering device with the angle adjustment function is an important issue in the related mechanical design industry.

### Summary of the Invention

This in mind, the present invention aims at providing a sheltering device with the angle adjustment function for solving above drawbacks.

This is achieved by a sheltering device according to claim 1. The dependent claims pertain to corresponding further developments and improvements.

As will be seen more clearly from the detailed description following below, the claimed sheltering device is applied to a computer display. The sheltering device includes a fixed lateral plate, a movable top plate and a movable lateral plate. The fixed lateral plate is disposed on the computer display. A gap is formed between the movable top plate and the fixed lateral plate. The movable lateral plate is disposed adjacent to the movable top plate and used to shelter at least a part of the gap.

### Brief Description of the Drawings

In the following, the invention is further illustrated by way of example, taking reference to the accompanying drawings. Thereof:
FIG. 1 and FIG. 2 are diagrams of a sheltering device in different operation modes according to an embodiment of the present invention,
FIG. 3 and FIG. 4 are exploded diagrams of the sheltering device in different views according to the embodiment of the present invention,
FIG. 5 is an assembly diagram of the sheltering device according to the embodiment of the present invention,
FIG. 6 is a diagram of the sheltering device according to another embodiment of the present invention,
FIG. 7 is a diagram of the sheltering device according to another embodiment of the present invention,
FIG. 8 is a diagram of the sheltering device according to another embodiment of the present invention,
FIG. 9 is a diagram of the sheltering device in another view according to the embodiment of the present invention,
FIG. 10 is a diagram of a part of the sheltering device according to the embodiment of the present invention, and
FIG. 11 is a diagram of another part of the sheltering device according to the embodiment of the present invention.

### Detailed Description

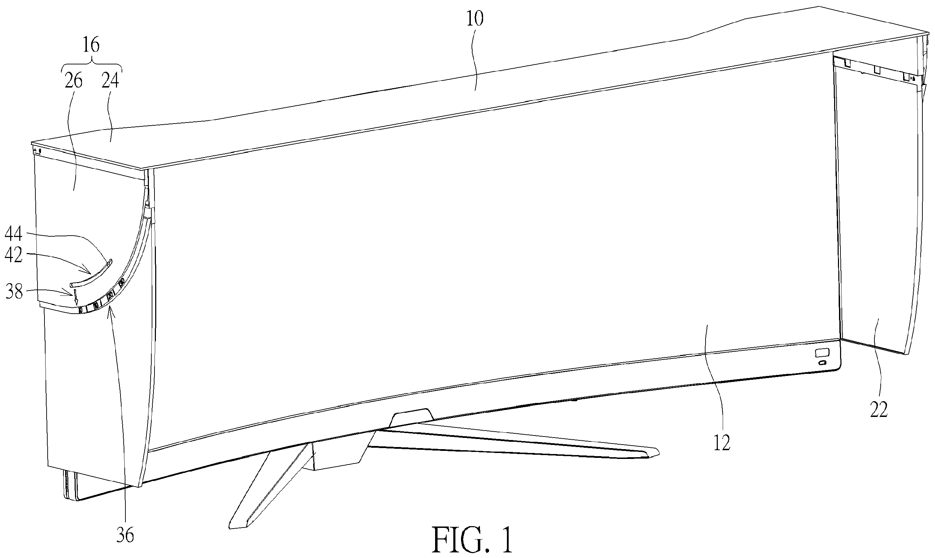

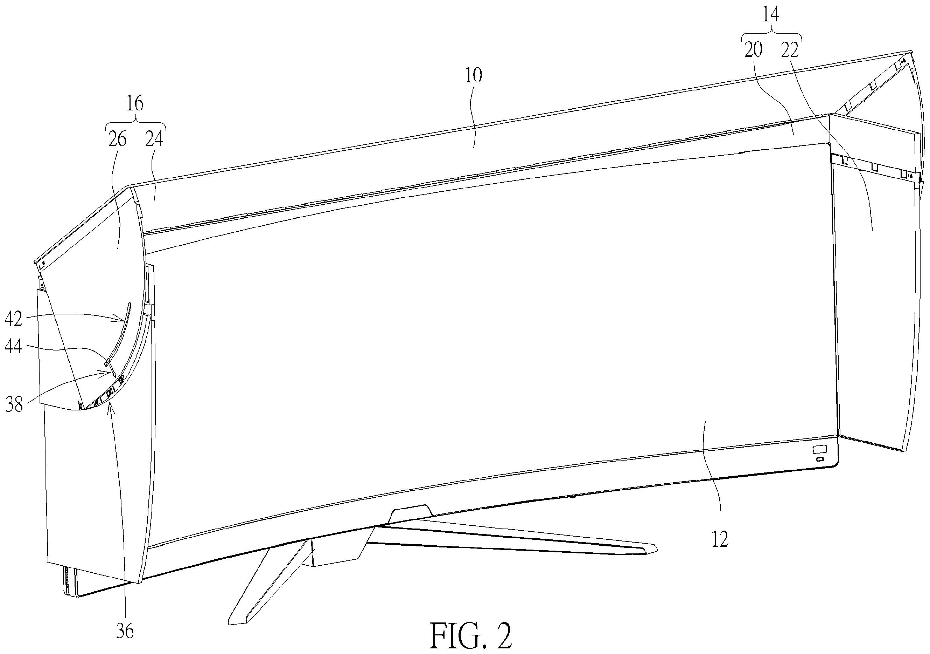

Please refer to FIG. 1 and FIG. 2. FIG. 1 and FIG. 2 are diagrams of a sheltering device 10 in different operation modes according to an embodiment of the present invention. The sheltering device 10 can be installed on a computer display 12. The sheltering device 10 can be freely moved relative to the computer display 12 for adjusting an angle of the shelter, and simultaneously prevent the computer display 12 from being affected by ambient light during angle adjustment of the shelter. The sheltering device 10 can include a fixed sheltering module 14, a movable sheltering module 16 and a rotation axle 18. The fixed sheltering module 14 can be disposed on the computer display 12 in a detachable manner. The movable sheltering module 16 can be connected to the fixed sheltering module 14 via the rotation axle 18 in a rotatable manner. The angle adjustment of the shelter can be executed through the movable sheltering module 16, and a detailed description is illustrated as following.

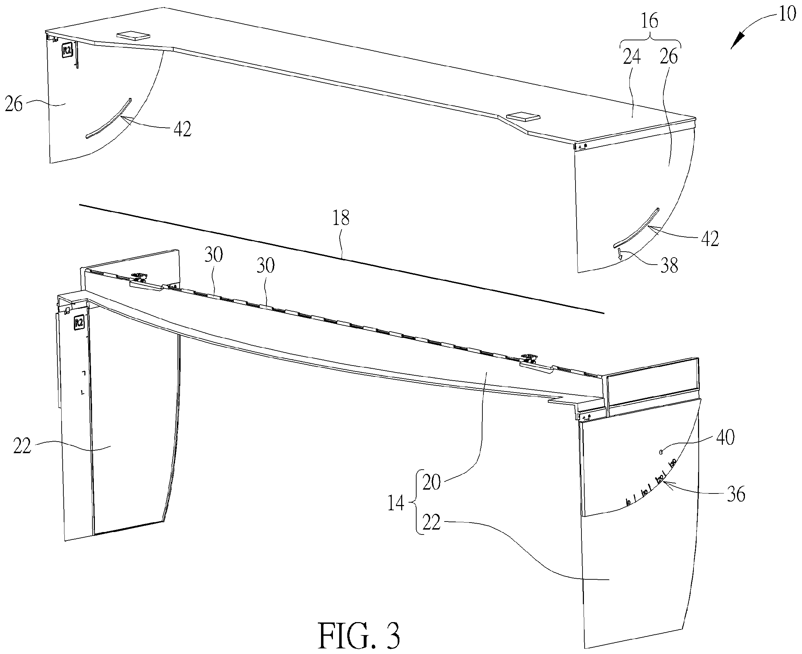

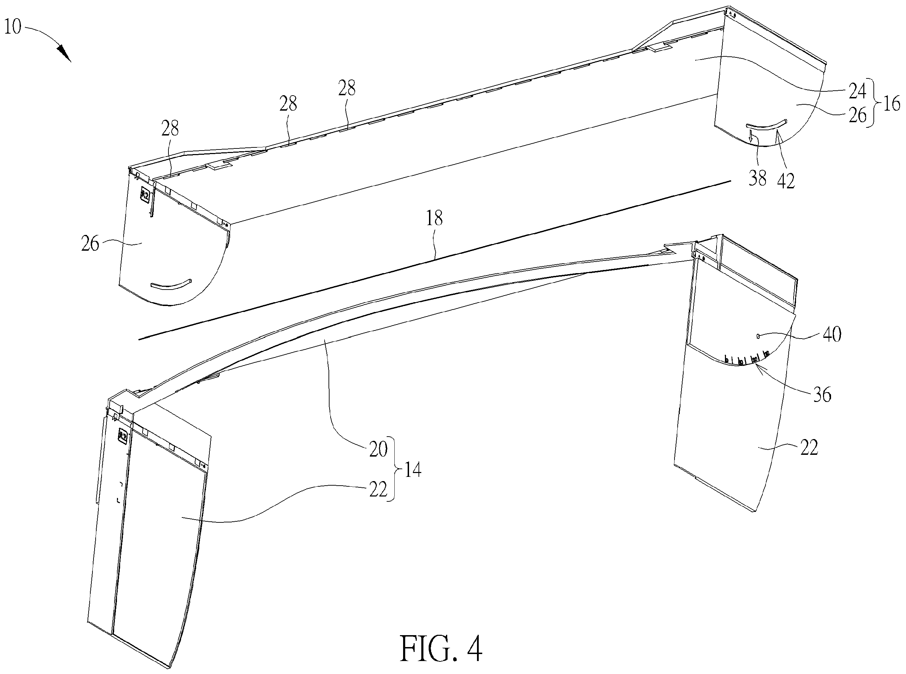

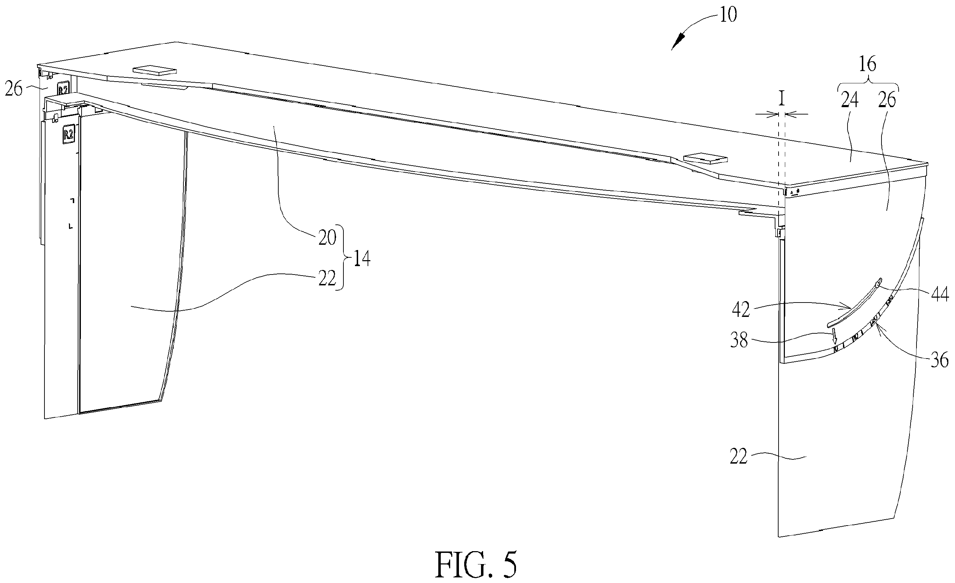

Please refer to FIG. 3 to FIG. 5. FIG. 3 and FIG. 4 are exploded diagrams of the sheltering device 10 in different views according to the embodiment of the present invention. FIG. 5 is an assembly diagram of the sheltering device 10 according to the embodiment of the present invention. The fixed sheltering module 14 can shelter lateral sides of the computer display 12, and be a connection base of the movable sheltering module 16. The fixed sheltering module 14 can preferably include a fixed top plate 20 and fixed lateral plates 22. The movable sheltering module 16 can preferably include a movable top plate 24 and movable lateral plates 26. Structural features of the fixed sheltering module 14 and the movable sheltering module 16 are not limited to assembly of the top plate and the lateral plate, which depends on a design demand.

The fixed top plate 20 can be disposed on an upper lateral side of the computer display 12. The fixed top plate 20 can obstruct the ambient light from an upper side of the computer display 12, and further can be the connection base of the fixed sheltering module 14. The fixed lateral plates 22 can be disposed on a left lateral side and a right lateral side of the computer display 12, and used to obstruct the ambient light from the lateral sides of the computer display 12. The fixed lateral plate 22 can be connected to a lateral edge of the fixed top plate 20, so that the fixed top plate 20 and the fixed lateral plates 22 can be assembled as a U-typed structure and then the U-typed structure can be installed on the computer display 12. An installation application of the fixed sheltering module 14 is not limited to the above-mentioned embodiment; for example, the fixed top plate 20 and the fixed lateral plates 22 can be respectively disposed on the upper side and the left lateral side and the right lateral side of the computer display 12, and then the fixed top plate 20 can be connected to the fixed lateral plate 22. The actual installation application of the fixed sheltering module 14 can depend on the design demand.

The movable top plate 24 can be pivoted to the fixed top plate 20, and used to obstruct the ambient light from the upper side of the computer display 12. In the embodiment, the rotation axle 18 can pass through at least one axle hole 28 formed on the movable top plate 24 and at least one axle hole 30 formed on the fixed top plate 20. The movable sheltering module 16 can be rotated relative to the fixed sheltering module 14 via assembly of the rotation axle 18, the fixed top plate 20 and the movable top plate 24. The movable lateral plates 26 can be disposed on two lateral sides of the movable top plate 24, and further overlapped with the fixed lateral plates 22. When the movable sheltering module 16 is rotated relative to the fixed sheltering module 14, an overlapped degree between the movable lateral plate 26 and the fixed lateral plate 22 can be varied accordingly; it should be mentioned that the movable lateral plate 26 is always overlapped with the fixed lateral plate 22 to avoid the ambient light from leaking and projecting onto the computer display 12 through a gap between the lateral plates.

Besides, if the movable lateral plates 26 are not disposed on the lateral sides of the movable top plate 24, the movable top plate 24 can be pivoted to the fixed top plate 20, and a gap I may be formed between the movable top plate 24 and the fixed lateral plate 22, as shown in FIG. 5. Therefore, the movable lateral plates 26 which are disposed on the lateral sides of the movable top plate 24 can shelter a part of or all of the gap I due to structural features of overlapping the fixed lateral plate 22. The gap I can be always sheltered by the movable lateral plate 26 no matter how the overlapped degree between the movable lateral plate 26 and the fixed lateral plate 22 is changed, and a sheltering function of the present invention can be maintained stably.

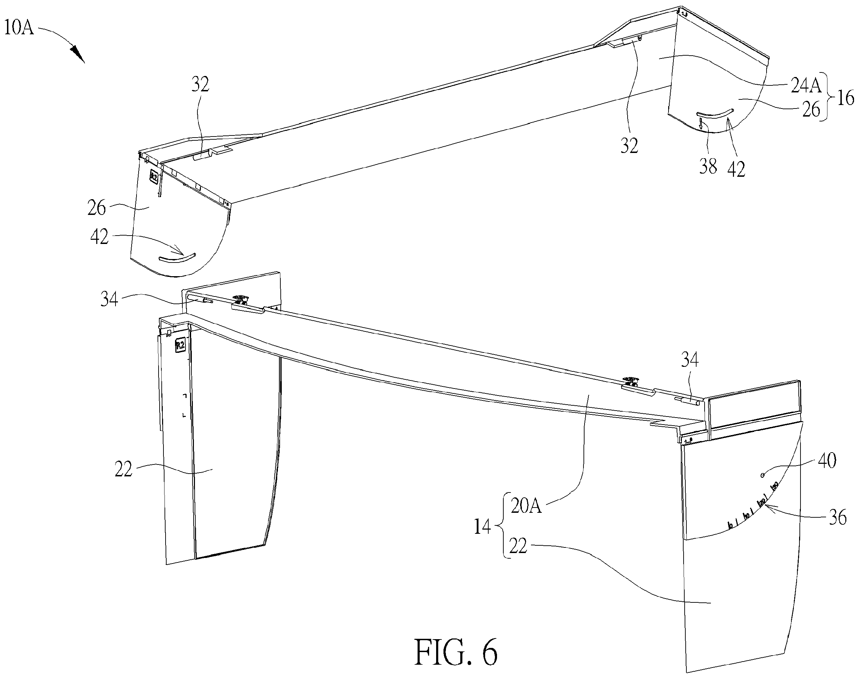

Please refer to FIG. 6. FIG. 6 is a diagram of the sheltering device 10A according to another embodiment of the present invention. In the embodiment, elements having the same numerals as ones of the above-mentioned embodiment have the same structures and functions, and the detailed description is omitted herein for simplicity. The fixed top plate 20A of the sheltering device 10A can include two first pivot portions 32 respectively disposed on two opposite sides of the fixed top plate 20A. The movable top plate 24A of the sheltering device 10A can include two second pivot portions 34 respectively disposed on two opposite sides of the movable top plate 24A. The first pivot portion 32 can be engaged with the second pivot portion 34 in a rotatable manner, and the movable top plate 24A can be freely rotated relative to the fixed top plate 20A. In the embodiment, the first pivot portion 32 and the second pivot portion 34 can respectively be a protrusion and an axle hole, which are not limited to the above-mentioned embodiment and depend on the design demand.

Please refer to FIG. 3 to FIG. 6. The fixed lateral plate 22 can include a dial scale 36, and the movable lateral plate 26 can include a scale indicator 38. The dial scale 36 can have several scale values that represent rotation angles of the movable sheltering module 16 relative to the fixed sheltering module 14. Position of the scale indicator 38 can be close to position of the dial scale 36. When the movable sheltering module 16 is rotated relative to the fixed sheltering module 14, the scale indicator 38 can point toward a corresponding scale value of the dial scale 36, and the rotation angle of the movable sheltering module 16 can be easily decided. For stably moving the movable lateral plate 26 relative to the fixed lateral plate 22, the present invention can further form a locked hole 40 on the fixed lateral plate 22, and further dispose an arc slot 42 on the movable lateral plate 26. The sheltering device 10 can insert a fixing element 44 slidably into the arc slot 42 and lock the fixing element 44 with the locked hole 40, so that the movable lateral plate 26 can be rotated relative to the fixed lateral plate 22 along a direction of the arc slot 42.

In the embodiment, the locked hole 40 can be a sunken hole with a screwed structure, and the fixing element 44 can be a screw or a bolt with a corresponding screwed structure. A locking depth of the fixing element 44 within the locked hole 40 can be adjusted in accordance with an engaged degree of the screwed structures. The present invention can insert the fixing element 44 into the deep of the locked hole 40, which means the locking depth can be increased to raise pressure of the fixing element 44 applied for the movable lateral plate 26, and rotation of the movable lateral plate 26 relative to the fixed lateral plate 22 can be constrained accordingly. For adjusting an angle of the movable sheltering module 16, the locking depth can be decreased to reduce the pressure of the fixing element 44 applied for the movable lateral plate 26, and the movable lateral plate 26 can be easily rotated relative to the fixed lateral plate 22.

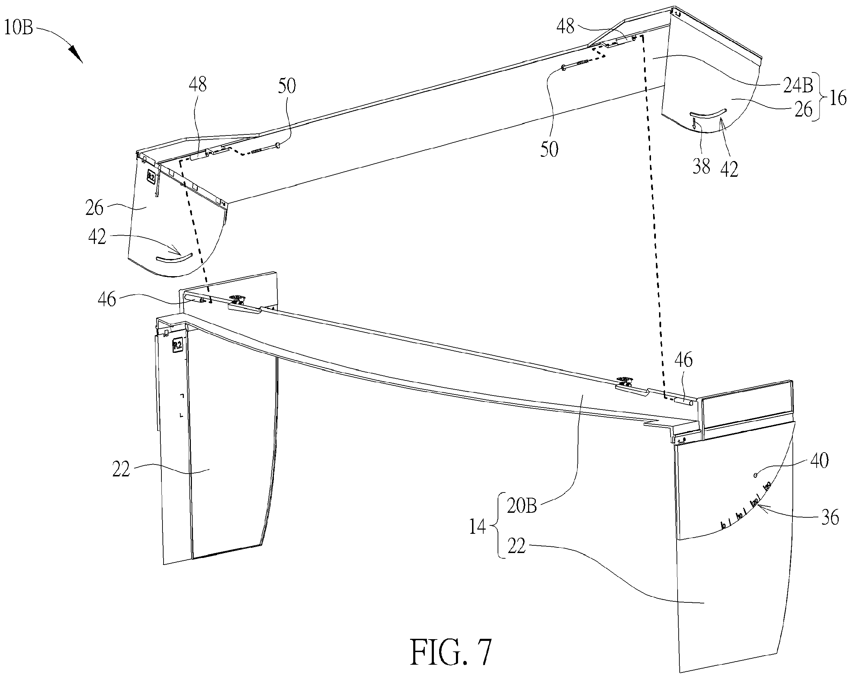

Please refer to FIG. 7. FIG. 7 is a diagram of the sheltering device 10B according to another embodiment of the present invention. In the embodiment, elements having the same numerals as ones of the above-mentioned embodiment have the same structures and functions, and the detailed description is omitted herein for simplicity. The fixed top plate 20B and the movable top plate 24B of the sheltering device 10B can respectively include an axle hole 46 and an axle hole 48. The sheltering device 10 can sequentially insert the fixing element 50 into the axle hole 48 on the movable top plate 24B and the axle hole 46 on the fixed top plate 20B. The axle hole 46 and the fixing element 50 may preferably have the screw structures. The locking depth of the fixing element 50 inserting into the axle hole 46 can be adjusted via the engaged degree of the screw structures. In the embodiment, the axle hole 48 may optionally include or have no screw structure; any embodiment that does not affect adjustment of the locking depth between the fixing element 50 and the axle hole 46 belongs to a design scope of the present invention.

Moreover, the fixing element 50 may insert into the axle hole 46 on the fixed top plate 20B, and then be locked with the axle hole 48 on the movable top plate 24B; in the embodiment, the axle hole 48 may have the screw structure, and the axle hole 46 may optionally include or have no screw structure. The locking depth of the fixing element 50 relative to the axle hole 48 can be adjusted in accordance with the engaged degree of the screw structures. The fixing element 50 can be the screw or the bolt with the corresponding screw structure.

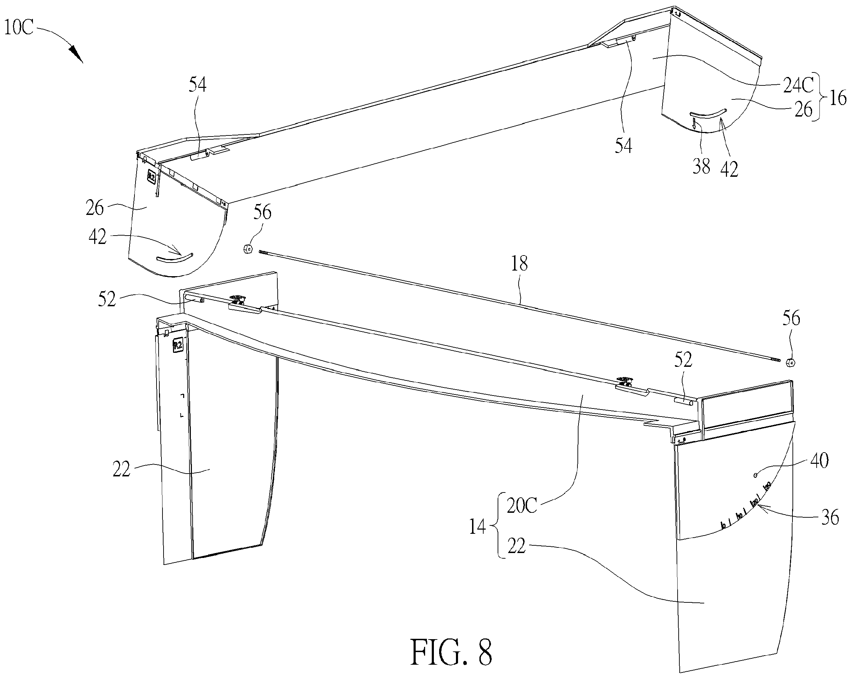

Please refer to FIG. 8. FIG. 8 is a diagram of the sheltering device 10C according to another embodiment of the present invention. In the embodiment, elements having the same numerals as ones of the above-mentioned embodiment have the same structures and functions, and the detailed description is omitted herein for simplicity. The fixed top plate 20C and the movable top plate 24C of the sheltering device 10C can respectively include axle holes 52 and axle holes 54. Two ends of the rotation axle 18 can respectively pass through the corresponding axle hole 54 on the movable top plate 24C and the corresponding axle hole 52 on the fixed top plate 20C, and be locked with the corresponding fixing element 56 in a locking depth adjustable manner. In the embodiment, the fixing element 56 can be a nut with the screw structure, or any elements with similar functions. The fixing element 56 can locked on two ends of the rotation axle 18. The axle hole 52 and the axle hole 54 may optionally include or have no screw structure.

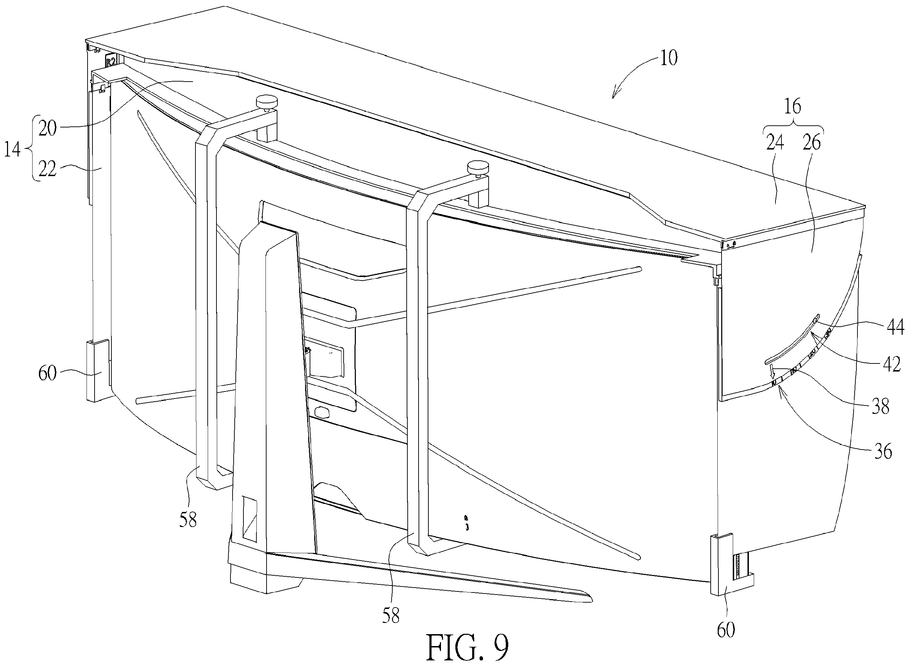

Please refer to FIG. 9. FIG. 9 is a diagram of the sheltering device 10 in another view according to the embodiment of the present invention. The sheltering device 10 can further include a plurality of fixing components used to stably fix the sheltering device 10 on the computer display 12, such as a first fixing component 58 and a second fixing component 60. An upper end and a lower end of the first fixing component 58 can be respectively connected to the fixed sheltering module 14 and engaged with the computer display 12. The first fixing component 58 can be designed as a C-typed structure. The upper end of the C-typed structure can be locked with the fixed lateral plate 22, and the lower end of the C-typed structure can cover and buckle a back plate of the computer display 12. Two opposite ends of the second fixing component 60 can be respectively connected to the fixed sheltering module 14 and engaged with the computer display 12. The second fixing component 60 can be designed as a L-typed structure. Two ends of the L-typed structure can be respectively locked with the lateral sides or corners of the fixed lateral plate 20 and the computer display 12. Numbers and types of the first fixing component 58 and the second fixing component 60 are not limited to the embodiment shown in FIG. 9, and depend on the design demand.

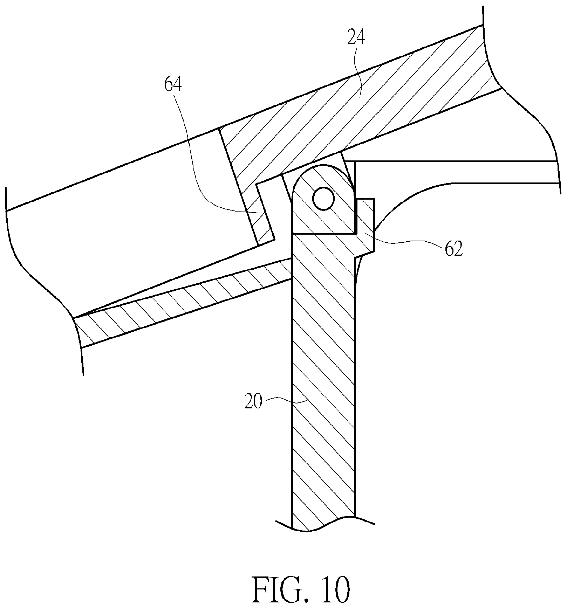

Please refer to FIG. 10. FIG. 10 is a diagram of a part of the sheltering device 10 according to the embodiment of the present invention. The fixed top plate 20 can optionally include a first sheltering portion 62 disposed on the lateral side of the fixed top plate 20 adjacent to the movable top plate 26 and stretched outwardly. A structural height of the first sheltering portion 62 can be greater than a gap difference between the movable top plate 24 and the fixed top plate 20. Besides, the movable top plate 24 can optionally include a second sheltering portion 64 disposed on the lateral side of the movable top plate 24 adjacent to the fixed top plate 20 and stretched outwardly. A structural height of the second sheltering portion 64 can be greater than the gap difference between the movable top plate 24 and the fixed top plate 20, as shown in FIG. 10. The first sheltering portion 62 and the second sheltering portion 64 can be overlapped when the movable sheltering module 16 is rotated relative to the fixed sheltering module 14, so that the gap between the movable top plate 24 and the fixed top plate 20 can be sheltered to avoid light leakage.

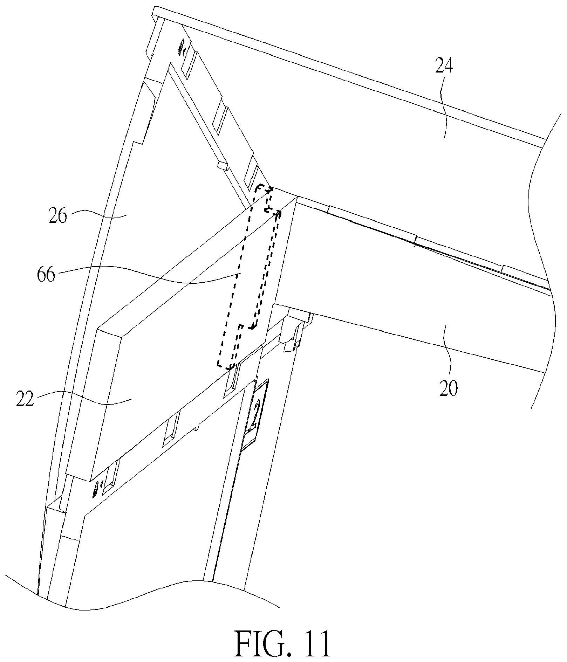

Please refer to FIG. 11. FIG. 11 is a diagram of another part of the sheltering device 10 according to the embodiment of the present invention. The fixed top plate 20 can optionally include an auxiliary sheltering portion 66 disposed on the lateral side of the fixed top plate 20 adjacent to the fixed lateral plate 22 and the movable lateral plate 26, and stretched outwardly. The auxiliary sheltering portion 66 can be overlapped with a rear edge of the movable lateral plate 26, and used to shelter the gap between the fixed lateral plate 22 and the movable lateral plate 26 to avoid the light leakage. Numbers and types of the first sheltering portion 62, the second sheltering portion 64 and the auxiliary sheltering portion 66 are not limited to the above-mentioned embodiment, and depend on the design demand.

In conclusion, the present invention can connect the fixed lateral plate with the fixed top plate to form the fixed sheltering module, and connect the movable top plate with the fixed top plate via the rotation axle, and then connect the movable lateral plate with the movable top plate to form the movable sheltering module, so as to accomplish the sheltering device. The sheltering device can utilize the first fixing component and the second fixing component to lock with the computer display via when being installed on the computer display, so that the sheltering device and the computer display are not separated due to slight impact. Assembly order of the sheltering device is not limited to the above-mentioned embodiment, and other possible description is omitted herein for simplicity. The sheltering device of the present invention can freely rotate the movable sheltering module relative to the fixed sheltering module or the computer display through overlap between the fixed lateral plate and the movable lateral plate, and the dial scale and the scale indicator can be used to immediately point the rotation angle of the movable sheltering module. When the movable sheltering module is rotated, the movable lateral plate can be moved relative to the fixed lateral plate along the direction of the arc slot and always overlapped with the fixed lateral plate, and therefore the sheltering device can shelter all sides around the computer display.

## Claims

1. A sheltering device (10, 10A, 10B, 10C) applied to a computer display (12), **characterized in that** the sheltering device (10, 10A, 10B, 10C) comprises:
a fixed lateral plate (22) disposed on the computer display (12);
a movable top plate (24, 24A, 24B, 24C), a gap (I) being formed between the movable top plate (24, 24A, 24B, 24C) and the fixed lateral plate (22); and
a movable lateral plate (26) disposed adjacent to the movable top plate (24, 24A, 24B, 24C) and used to shelter at least a part of the gap (I).

2. The sheltering device (10, 10A, 10B, 10C) of claim 1, **characterized in that** the sheltering device (10, 10A, 10B, 10C) further comprises a fixed top plate (20, 20A, 20B, 20C), the fixed lateral plate (22) is disposed adjacent to the fixed top plate (20, 20A, 20B, 20C), and the movable top plate (24, 24A, 24B, 24C) is rotatably connected to the fixed top plate (20, 20A, 20B, 20C).

3. The sheltering device (10, 10A, 10B, 10C) of claim 1, **characterized in that** the movable lateral plate (26) is at least partly overlapped by the fixed lateral plate (22) in a relatively movable manner.

4. The sheltering device (10, 10A, 10B, 10C) of claim 2, **characterized in that** the sheltering device (10, 10A, 10B, 10C) further comprises a rotation axle (18) passing through an axle hole (28, 48) of the movable top plate (24, 24A, 24B, 24C), two opposite ends of the rotation axle (18) respectively inserts into two axle holes (30, 46) on the fixed top plate (20, 20A, 20B, 20C).

5. The sheltering device (10, 10A, 10B, 10C) of claim 2, **characterized in that** the fixed top plate (20, 20A, 20B, 20C) further comprises two first pivot portions (32) respectively disposed on two opposite sides of the fixed top plate (20, 20A, 20B, 20C), the movable top plate (24, 24A, 24B, 24C) further comprises two second pivot portions (34) respectively disposed on two opposite sides of the movable top plate (24, 24A, 24B, 24C), the first pivot portions (32) are respectively engaged with the second pivot portions (34) in a rotatable manner.

6. The sheltering device (10, 10A, 10B, 10C) of claim 5, **characterized in that** the first pivot portions (32) and the second pivot portions (34) respectively are protrusions and axle holes.

7. The sheltering device (10, 10A, 10B, 10C) of claim 1, **characterized in that** the fixed lateral plate (22) and the movable lateral plate (26) respectively comprises a dial scale (36) and a scale indicator (38), the scale indicator (38) is used to point a corresponding scale value on the dial scale (36) in accordance with a movement of the movable lateral plate (26) relative to the fixed lateral plate (22).

8. The sheltering device (10, 10A, 10B, 10C) of claim 1, **characterized in that** the fixed lateral plate (22) comprises a locked hole (40), the movable lateral plate (26) comprises an arc slot (42), the sheltering device (10, 10A, 10B, 10C) further comprises a fixing element (50), and the fixing element (50) slidably inserts into the arc slot (42) and is locked with the locked hole (40).

9. The sheltering device (10, 10A, 10B, 10C) of claim 8, **characterized in that** the sheltering device (10, 10A, 10B, 10C) adjusts a locking depth of the fixing element (50) within the locked hole (40), so as to press the movable lateral plate (26) and constrain a movement of the movable lateral plate (26) relative to the fixed lateral plate (22).

10. The sheltering device (10, 10A, 10B, 10C) of claim 2, **characterized in that** the sheltering device (10, 10A, 10B, 10C) further comprises a fixing element (50) inserting into an axle hole (28, 48) on the movable top plate (24, 24A, 24B, 24C), and locked with an axle hole (30, 46) on the fixed top plate (20, 20A, 20B, 20C) in a depth adjustable manner.

11. The sheltering device (10, 10A, 10B, 10C) of claim 2, **characterized in that** the sheltering device (10, 10A, 10B, 10C) further comprises a rotation axle (18) and a fixing element (50), the rotation axle (18) inserts into an axle hole (28, 48) on the movable top plate (24, 24A, 24B, 24C) and an axle hole (30, 46) on the fixed top plate (20, 20A, 20B, 20C), and is locked with the fixing element (50) in a depth adjustable manner.

12. The sheltering device (10, 10A, 10B, 10C) of claim 1, **characterized in that** the sheltering device (10, 10A, 10B, 10C) further comprises a fixing component (58, 60), two opposite ends of the fixing component (58, 60) are respectively connected to the fixed lateral plate (22) and engaged with the computer display (12).

13. The sheltering device (10, 10A, 10B, 10C) of claim 12, **characterized in that** the fixing component (58, 60) is a C-typed structure disposed on the fixed lateral plate (22) and used to buckle the computer display (12).

14. The sheltering device (10, 10A, 10B, 10C) of claim 12, **characterized in that** the fixing component (58, 60) is a L-typed structure, and two ends of the L-typed structure are locked with the fixed lateral plate (22) and the computer display (12) respectively.

15. The sheltering device (10, 10A, 10B, 10C) of claim 2, **characterized in that** the fixed top plate (20, 20A, 20B, 20C) further comprise a first sheltering portion (62) disposed on a side of the fixed top plate (20, 20A, 20B, 20C) adjacent to the movable top plate (24, 24A, 24B, 24C) and stretched outwardly, a structural height of the first sheltering portion (62) is greater than a gap difference between the movable top plate (24, 24A, 24B, 24C) and the fixed top plate (20, 20A, 20B, 20C).

16. The sheltering device (10, 10A, 10B, 10C) of claim 15, **characterized in that** the movable top plate (24, 24A, 24B, 24C) further comprises a second sheltering portion (64) disposed on a side of the movable top plate (24, 24A, 24B, 24C) adjacent to the fixed top plate (20, 20A, 20B, 20C) and stretched outwardly, a structural height of the second sheltering portion (64) is greater than the gap difference, and the first sheltering portion (62) and the second sheltering portion (64) are overlapped when the movable lateral plate (26) is rotated relative to the fixed lateral plate (22).

17. The sheltering device (10, 10A, 10B, 10C) of claim 2, **characterized in that** the fixed top plate (20, 20A, 20B, 20C) further comprises an auxiliary sheltering portion (66) overlapped with a rear edge of the movable lateral plate (26).
